Europäisches Patentamt

European Patent Office

Office européen des brevets

(19)

(11) Publication number : **0 497 504 A2**

(12) # EUROPEAN PATENT APPLICATION

(21) Application number : **92300585.4**

(22) Date of filing : **23.01.92**

(51) Int. Cl.⁵ : **G06F 12/06**

(30) Priority : **30.01.91 JP 27712/91**

(43) Date of publication of application :
**05.08.92 Bulletin 92/32**

(84) Designated Contracting States :
**DE FR GB**

(71) Applicant : **International Business Machines
Corporation
Old Orchard Road
Armonk, N.Y. 10504 (US)**

(72) Inventor : **Canova, Frank J.
922 South West 35 Street
Boynton Beach, Florida 33435 (US)**

(74) Representative : **Killgren, Neil Arthur
IBM United Kingdom Limited Intellectual
Property Department Hursley Park
Winchester Hampshire SO21 2JN (GB)**

(54) Attachment identifier for information processing system.

(57) An attachment 20 to a computer 10 is identified by performing computer read/write operation on ID pins 1, 2 on the attachment via interrogated connectors 450 :0, 450 :1 in a series of cycles. In the first cycle, the contents of the machine ID is read. Based on the result, one of the signals (previously high signals) is made to go low in the second cycle. The final read cycle determines the machine ID. It is possible to mix classical machines that did not use this invention with fewer machine ID's with machines that incorporate this expanded identifier approach.

FIG. 1

EP 0 497 504 A2

This invention relates to information processing systems, and more particularly to identifying attachments to such systems.

When an information processing system such as a personal computer is to be attached to an input/output apparatus such as a display apparatus or many kinds of optional cards, the personal computer occasionally needs to identify the machine to be attached in order to properly operate the machine. In the prior art, machine identifications are created by selectively grounding identification pins, and the identification apparatus such as the personal computer identifies the machine by detecting the combination of the levels of the pins. The number of machines so identified is limited to the exponential N of 2 combinations where N is the number of the pins. If dynamic identification signals are adopted such as using multiplexing techniques, the combinations can be larger but the detection logic becomes more complex.

It is accordingly an object of the invention to provide a machine identification system so constructed to achieve the expansion of machine identification numbers without very complex logic.

According to the invention there is provided an information processing system including an information processing apparatus and an attachment apparatus to be connected to said information processing apparatus via identification signal terminals, wherein at least one of said terminals is connected to at least one of the remaining terminals directly or through a logic gate or gates, and said information processing apparatus is adapted to identify said attachment apparatus based on the level change on said terminals before and after said information processing apparatus writes a certain data signal on said terminal or terminals.

There is further provided an information processing apparatus having identification signal connectors to be attached to the identification signal terminals of an attachment apparatus to be attached to said information processing apparatus and identifying said attachment apparatus based on the combination of the signal levels on said terminals, wherein said information processing apparatus has level change means for changing the signal levels on the said identification signal terminals, and identifying means for determining the identity of said attachment apparatus based on the combination of the signal levels on said terminals before and after the signal level change caused by said level change means.

An attachment apparatus suitable for connection to such a processing apparatus comprises an attachment apparatus for attachment to an information processing apparatus, said apparatus having identification signal terminals, wherein at least one of said terminals is connected to at least one of the remaining terminals directly or through a logic gate or gates, and said apparatus is so constructed as to be identified based on the signal level change appearing on said terminals before and after a certain level signal or signals are written on said terminal or terminals by said information processing apparatus. In order that the invention may be well understood, preferred embodiments thereof will now be described with reference to the accompanying drawings.

BRIEF DESCRIPTION OF THE DRAWINGS:

Fig. 1 is a circuit block diagram of the first embodiment of the invention;
Figs. 2 through 7 are circuit block diagrams of machines to be identified in the first embodiment, respectively;
Fig. 8 is a circuit block diagram of the second embodiment of the invention;
Fig. 9 is a circuit block diagram of the third embodiment of the invention;
Figs. 10 through 43 are circuit block diagrams of machines to be identified in the third embodiment, respectively;

DETAILED DESCRIPTION:

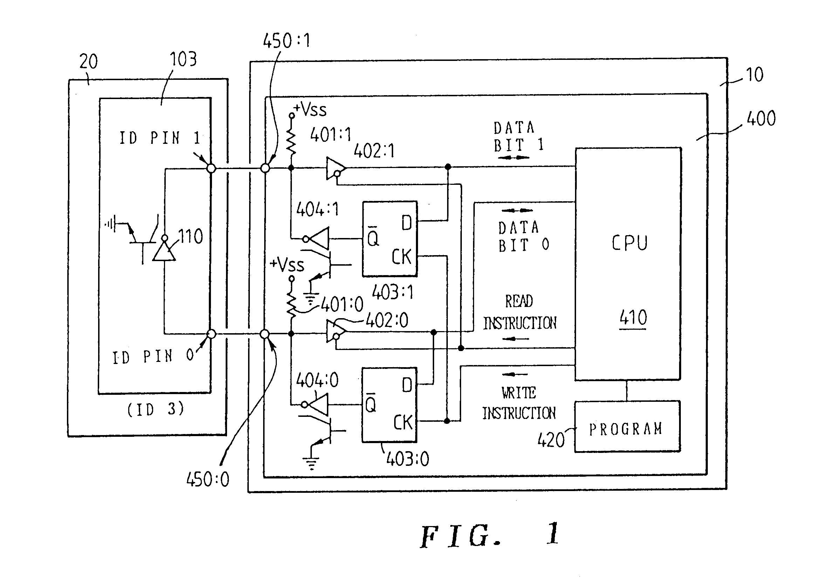

Referring in detail to Fig.1, an attachment apparatus 20 has a machine 103 which is to be identified by an inquiring apparatus 400 has its machine identification number 3 (ID 3), and has an ID pin 0 and an ID pin 1. The ID pin 0 and the ID pin 1 are the terminals for identification data. The ID pin 0 is connected to the input line of a NOT gate 110. The ID pin 1 is connected to the output line of the NOT gate 110. The NOT gate 110 has an open collector structure.

An inquiring apparatus 400 has ID connectors 450:0 and 450:1 which are to be connected to the ID pins 0 and 1, respectively. The ID connector 450:0 is connected to a power supply level +Vss through a pull-up resistor 401:0, and is also connected to one of the data line of a CPU 410 through a tri-state buffer 402:0. The control line of the tri-state buffer 402:0 is connected to one of the read data control signal lines of the CPU 410. When the CPU outputs a read instruction to the control line of the tri-state buffer 402:0, the signal level on the ID pin 0 is detected by the CPU 410, that is, the identification data or ID data is read by the CPU 410.

The output line of the tri-state buffer 402:0 is also connected to a D (Data) input line of a D-type flip-flop 403:0. A CK (Clock) input line of the flip-flop 403:0 is connected to one of the Write Data control signal lines of the CPU 410. When the CPU 410 outputs a write instruction to the CK input line of the flip-flop 403:0, a Q output line of the flip-flop 403:0 has a signal of the same level as that of the D input line. The same structure as the above is repeated to the ID connector 450:1.

The identification operation is as follows: This operation is accomplished by machine ID data read/write/read cycles. At the first cycle, the CPU 410 reads out the identification data from the ID pins 0 and 1. As for the example in Fig.1, the ID pin 0 is pulled up to the +Vss through the pull-up resistor 404:0 and results in H level. The ID pin 1 is connected to the earth level through the NOT gate 110 and results in L level. At the second cycle, a L level is written to ID pins that are read read as a H level in the first cycle. The CPU 410 outputs the write instruction to the CK input lines of the flip-flops 403:0 and 403:1. L level or 0 data is written to the ID pin 0 and H level or 1 data is written to the ID pin 1. This results in L level on the ID pin 0 and H level on the ID pin 1. At the third cycle, the CPU reads out these signal levels, and decides that the machine 103 with identification number 3 is connected to the inquiring apparatus 400, based on the combination of the identification data obtained at the first and third cycles.

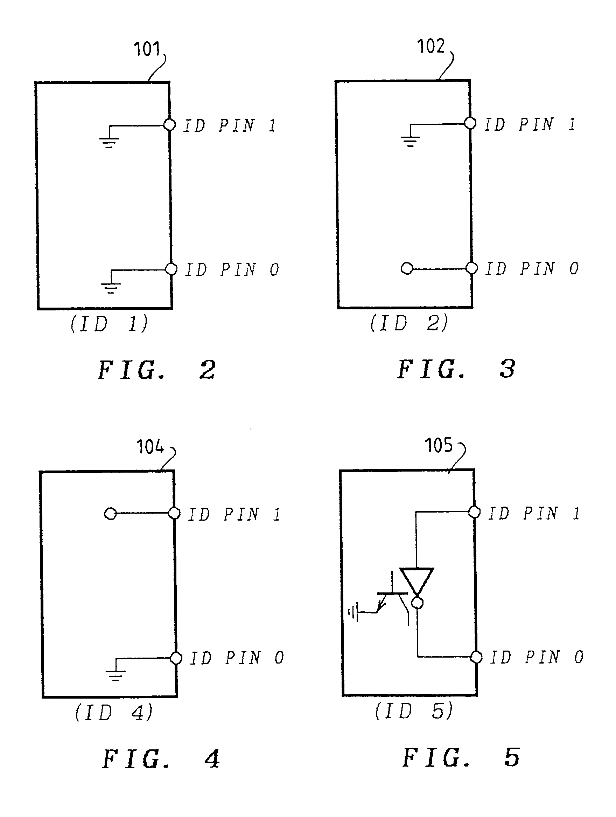

Fig. 2 shows a machine 101 to be identified which has identification number 1 (ID 1). The ID pins 0 and 1 are connected to the earth level. Therefore, the signal levels on the ID pins 0 and 1 read out at the first cycle and the third cycle are all L level. The CPU 410 decides that the machine 101 with ID 1 is connected to the inquiring apparatus 400.

Fig. 3 shows a machine 102 to be identified which has identification number 2 (ID 2). The ID pin 0 is opened, while the ID pin 1 is connected to the earth level. Therefore, the signal levels on the ID pins 0 and 1 read out at the first cycle are H level and L level, respectively. The signal levels on the ID pins 0 and 1 read out at the third cycle are L level. The CPU 410 decides that the machine 102 with ID 2 is connected to the inquiring apparatus 400.

Fig. 4 shows a machine 104 to be identified which has identification number 4 (ID 4). The ID pin 1 is opened, while the ID pin 0 is connected to the earth level. Therefore, the signal levels on the ID pins 0 and 1 read out at the first cycle are L level and H level, respectively. The signal levels on the ID pins 0 and 1 read out at the third cycle are L level. The CPU 410 decides that the machine 104 with ID 4 is connected to the inquiring apparatus 400.

Fig. 5 shows a machine 105 to be identified which has identification number 5 (ID 5). The ID pin 0 is connected to the output line of the NOT gate 110 and the ID pin 1 is connected to the input line of the NOT gate 110. Therefore, the signal levels on the ID pins 0 and 1 read out at the first cycle are L level and H level, respectively. The signal levels on the ID pins 0 and 1 read out at the third cycle are H level and L level, respectively. The CPU 410 decides that the machine 105 with ID 5 is connected to the inquiring apparatus 400.

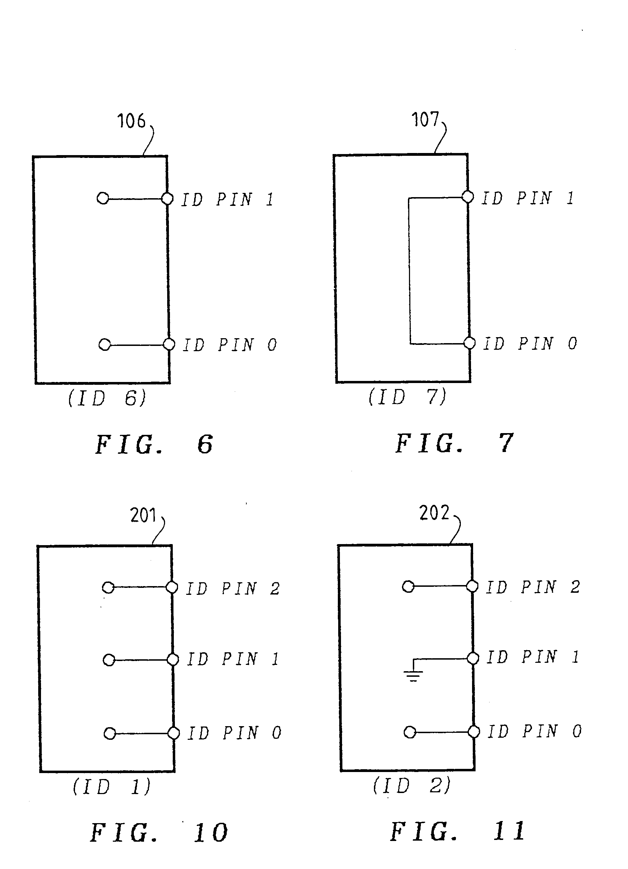

Fig. 6 shows a machine 106 to be identified which has identification number 6 (ID 6). The ID pins 0 and 1 are opened. Therefore, the signal levels on the ID pins 0 and 1 read out at the first cycle are all H level. The signal levels on the ID pins 0 and 1 read out at the third cycle are all L level. The CPU 410 decides that the machine 106 with ID 6 is connected to the inquiring apparatus 400.

Fig. 7 shows a machine 107 to be identified which has identification number 7 (ID 7). The ID pins 0 and 1 are connected each other. Therefore, the signal levels on the ID pins 0 and 1 read out at the first cycle are all H level. The signal levels on the ID pins 0 and 1 read out at the third cycle are H level and L level, respectively. The CPU 410 decides that the machine 107 with ID 7 is connected to the inquiring apparatus 400.

The combinations of the identification data on the first embodiment are as follows:

| ID pin 1 | ID pin 0 | Identification Number |
|---|---|---|
| L ---> L | L ---> L | 1 |
| L ---> L | L ---> H | 2 |
| L ---> H | H ---> L | 3 |
| H ---> L | L ---> L | 4 |
| H ---> L | L ---> H | 5 |
| H ---> L | H ---> L | 6 |
| H ---> L | H ---> H | 7 |

In the above table, H/L left side of the arrow indicate whether the signal levels on the ID pins 0 and 1 read out at the first cycle are H or L. H/L right side of the arrow indicate whether the signal levels on the ID pins 0 and 1 read out at the third cycle are H or L. The CPU 410 decides which identification number machine is attached based on the above combination.

According to the first embodiment, totally 7 machines are identified through 2 ID pins. And the prior art ID pin structure wherein ID pins are only selectively tieing to the earth level, totally 4 machines are identified. That is, the embodiment has downward compatibility.

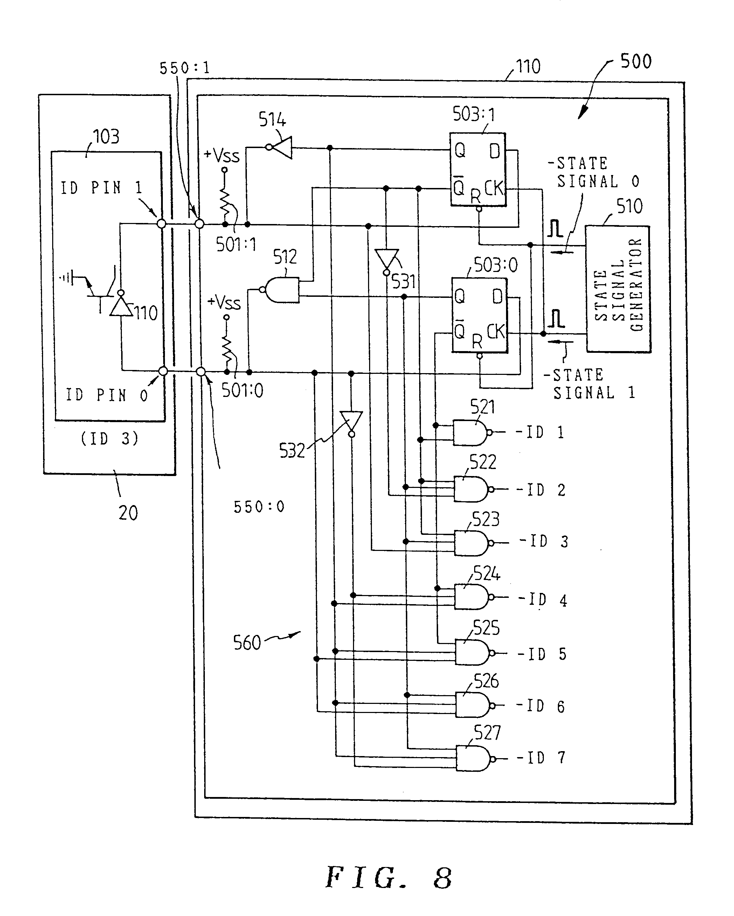

Fig. 8 shows the second embodiment. While in the first embodiment the CPU and related software decide the identification of the machine, the second embodiment decides the identification of the machine using decoder circuit. In Fig. 8, an inquiring apparatus 500 has D-type flip-flops 503:0 and 503:1. The R (reset) input lines of the flip-flops 503:0 and 503:1 are commonly connected to one of the output lines of a state signal generator 510. The CK input lines of the flip-flops 503:0 and 503:1 are commonly connected to the other of the output lines of the generator 510. The generator 510 outputs a - state 0 signal to the R input lines prior to a - state 1 signal to the CK input lines.

The D input lines of the flip-flops 503:0 and 503:1 are connected to ID connectors 550:0 and 550:1, respectively. The ID connectors 550:0 and 550:1 are connected to the power supply level + Vss through pull-up resistors 501:0 and 501:1, respectively. The Q output line of the flip-flop 503:0 is connected to one input line of a NAND gate 512, the other input line of the NAND gate 512 is connected to the inverted Q output line of the flip-flop 503:1. The output line of the NAND gate 512 is connected to the ID connector 550:0. And the Q output line of the flip-flop 503:1 is connected to ID connector 550:1 through a NOT gate 514. Both the NAND gate 512 and NOT gate 514 are open collector type.

The inquiring apparatus 500 has a decode circuit 560 which decodes one of the identification numbers 1 through 7. The decode circuit 560 has NAND gates 521 through 527. The NAND gate 521 has two input lines, one of which is connected to the inverted Q output line of the flip-flop 503:0 and the other of which is connected to the inverted Q output line of the flip-flop 503:1. After the - state 0 signal is outputted and then the - state 1 signal is outputted, if the NAND gate 521 outputs L level signal, this L level signal indicates that the machine 101 with identification number 1 is attached to the inquiring apparatus 500.

A NAND gate 522 has three input lines, one of which is connected to the Q output line of the flip-flop 503:0, another of which is connected to the inverted Q output line of the flip-flop 503:1, and the remaining one of which is connected to the ID connector 550:1 through a NOT gate 531. After the - state 0 signal is outputted and then the - state 1 signal is outputted, if the NAND gate 522 outputs L level signal, this L level signal indicates that the machine 102 with identification number 2 is attached to the inquiring apparatus 500.

A NAND gate 523 has three input lines, one of which is connected to the inverted Q output line of the flip-flop 503:1, another of which is connected to the Q output line of the flip-flop 503:0, and the remaining one of which is connected to the ID connector 550:1. After the - state 0 signal is outputted and then the - state 1 signal is outputted, if the NAND gate 523 outputs L level signal, this L level signal indicates that the machine 103 with identification number 3 is attached to the inquiring apparatus 500.

A NAND gate 524 has three input lines, one of which is connected to the inverted Q output line of the flip-flop 503:0, another of which is connected to the Q output line of the flip-flop 503:1, and the remaining one of which is connected to the ID connector 550:0 through a NOT gate 532. After the - state 0 signal is outputted and then the - state 1 signal is outputted, if the NAND gate 524 outputs L level signal, this L level signal indicates that the machine 104 with identification number 4 is attached to the inquiring apparatus 500.

A NAND gate 525 has three input lines, one of which is connected to the inverted Q output line of the flip-flop 503:0, another of which is connected to the Q output line of the flip-flop 503:1, and the remaining one of which is connected to the ID connector 550:0. After the - state 0 signal is outputted and then the - state 1 signal is outputted, if the NAND gate 525 outputs L level signal, this L level signal indicates that the machine 105 with identification number 5 is attached to the inquiring apparatus 500.

A NAND gate 526 has three input lines, one of which is connected to the Q output line of the flip-flop 503:0, another of which is connected to the Q output line of the flip-flop 503:1, and the remaining one of which is connected to the ID connector 550:0. After the - state 0 signal is outputted and then the - state 1 signal is outputted, if the NAND gate 526 outputs L level signal, this L level signal indicates that the machine 106 with identification number 6 is attached to the inquiring apparatus 500.

A NAND gate 527 has three input lines, one of which is connected to the Q output line of the flip-flop 503:0, another of which is connected to the Q output line of the flip-flop 503:1, and the remaining one of which is connected to the ID connector 550:0 through the NOT gate 532. After the - state 0 signal is outputted and then the - state 1 signal is outputted, if the NAND gate 527 outputs L level signal, this L level signal indicates that the machine 107 with identification number 7 is attached to the inquiring apparatus 500.

The decode circuit 560 may be expressed as follows: In the following, L0 and L1 represent the output signals of the flip-flops 503:0 and 503:1, respectively.

    – Identification Number 1 = NAND (-L1, -L0)
    – Identification Number 2 = NAND (-ID pin1, -L1, +L0)
    – Identification Number 3 = NAND (+ID pin1, -L1, +L0)
    – Identification Number 4 = NAND (-ID pin0, +L1, -L0)
    – Identification Number 5 = NAND (+ID pin0, +L1, -L0)
    – Identification Number 6 = NAND (+ID pin0, +L1, +L0)
    – Identification Number 7 = NAND (-ID pin0, +L1, +L0)

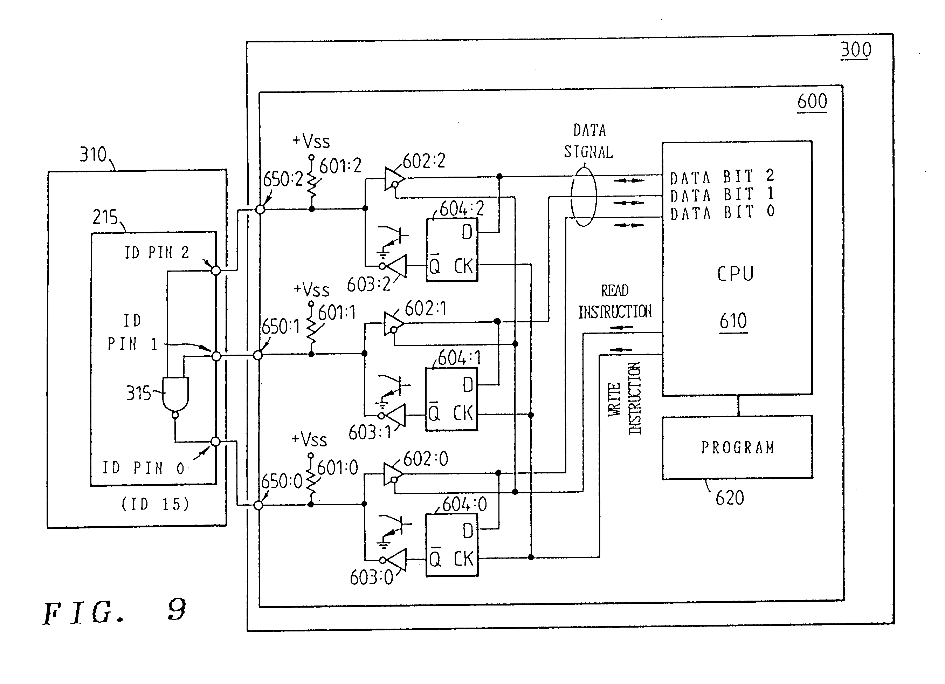

Fig. 9 shows a third embodiment. A machine 215 to be identified has three identification terminals, that are ID pins 0, 1, and 2. The ID pins 1 and 2 are connected to the input line of a NAND gate 315. The output line of the NAND gate 315 is connected to the ID pin 0.

An inquiring apparatus 600 has ID connectors 650:0, 650:1, and 650:2 which are connected to the ID pins 0, 1, and 2, respectively. The ID connectors 650:0, 650:1, and 650:2 are connected to the power supply level + Vss through pull-up resistors 601:0, 601:1, and 601:2, respectively. The signal levels or identification data on the ID pins 0, 1, and 2 are read by a CPU 610 through tri-state buffers 602:0, 602:1, and 602:2, respectively. A read instruction from the CPU 610 is to be applied in common to the control lines of the tri-state buffers 602:0, 602:1, and 602:2. The output lines of the tri-state buffers 602:0, 602:1, and 602:2 are also connected to the D input lines of D-type flip-flops 604:0, 604:1, and 604:2, respectively. A write instruction from the CPU 610 is to be applied in common to the CK input lines of the flip-flops 604:0, 604:1, and 604:2. Yhr inverted Q output lines of the flip-flops 604:0, 604:1, and 604:2 are connected to the input lines of NOT gate 603:0, 603:1, and 603:2, respectively. The output lines of the NOT gate 603:0, 603:1, and 603:2 are connected to the ID connectors 650:0, 650:1, and 650:2, respectively. The CPU 610 can write data into the ID pins 0, 1, and 2 through the flip-flops 604:0, 604:1, and 604:2, respectively.

The inquiring apparatus 600 identifies totally 35 kinds of machines including the machine 215 in Fig. 9. This 35 kinds machines include the 8 prior art machines wherein the ID pins 0, 1, and 3 are only selectively tieing to the earth level.

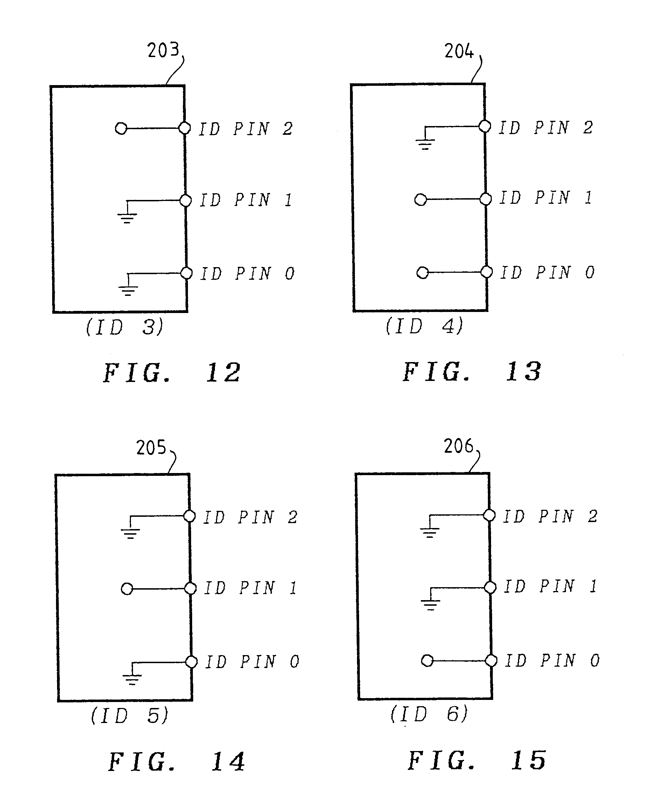

The operation for identification is as follows: At a first cycle, into all of the ID pins 0, 1, and 2, data 1 (H level signal) is written in common. By 111 written, all ID pins are pulled-up by resistors 601:0, 601:1, and 601:2 to H level. At a second cycle, all of the data on the ID pins 0, 1, and 2 are read by the CPU 610. If the ID data on the ID pins 0, 1, and 2 are read to be all L level, it indicates that a machine 207 with identification number 7 shown in Fig. 15 is attached to the inquiring apparatus 600. When the two of the ID data on the ID pins 0, 1, and 2 are read to be L level, it indicates that one of a machine 203 (Fig.12) with identification number 3, a machine 205 (Fig.14) with identification number 5, or a machine 206 (Fig.15) with identification number 6 is attached to the inquiring apparatus 600 depending on which pins are in L level.

If the ID data on the ID pins 0, 1, and 2 are read to be all H level or the two of the ID data on the ID pins are H level, the operation for identification will proceed with a third cycle. At the third cycle, the CPU 610 write HH, HL, LH, and LL levels sequentially into the two of the ID pins which were previously H levels. At a fourth cycle, the CPU 610 reads the signal level of the remaining ID pin. The CPU 610 can identify the machine attached based on the combination of the signal levels written at the third cycle and read at the forth cycle.

The above operation is indicated as follows:

| ID pin 2 | ID pin 1 | ID pin 0 | Result |
|---|---|---|---|
| H | H | H | ( ---> Level 2A Test ) |
| H | H | L | ( ---> Level 2B Test ) |
| H | L | H | ( ---> Level 2C Test ) |
| H | L | L | Identification Number 3 |
| L | H | H | ( ---> Level 2D Test ) |
| L | H | L | Identification Number 5 |
| L | L | H | Identification Number 6 |
| L | L | L | Identification Number 7 |

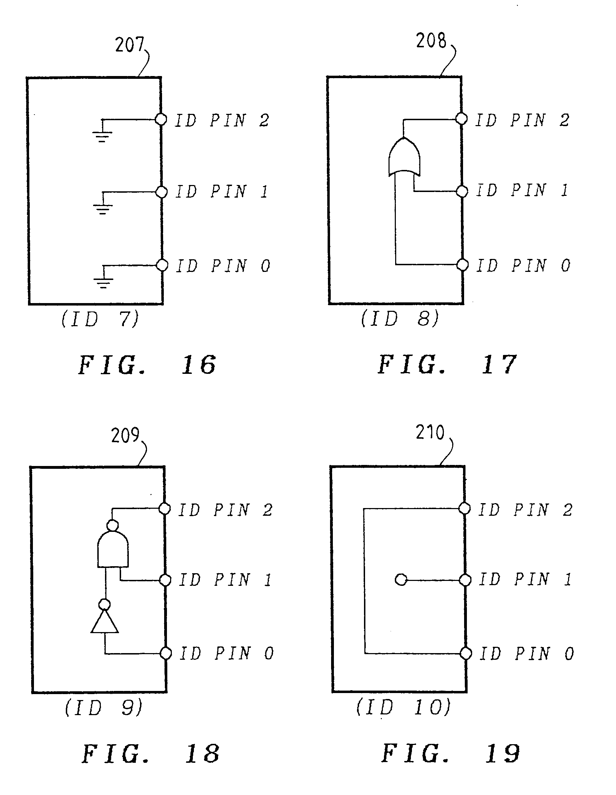

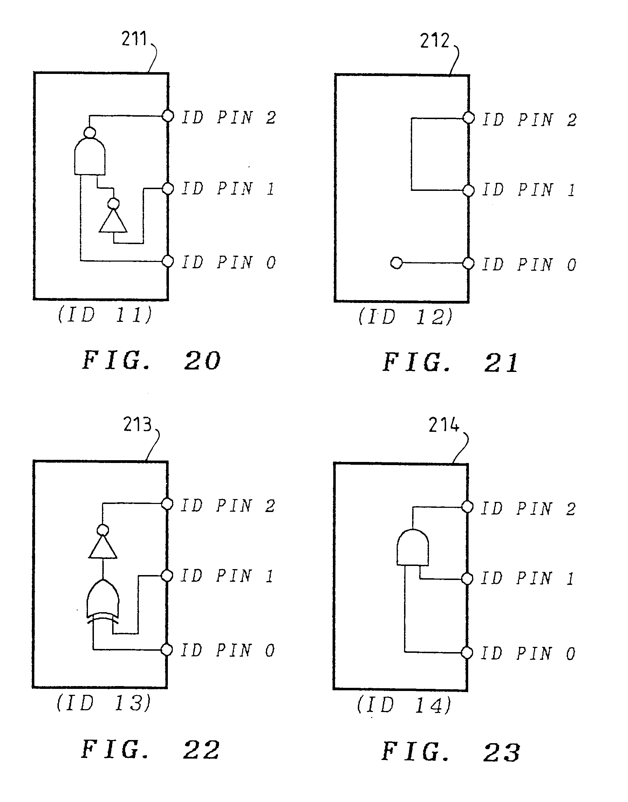

The level 2A test is operated when the ID signal levels on the ID pins are read to be all H levels at the second cycle. At the level 2A test, HH, HL, LH, and LL levels signals are sequentially written into the ID pins 0 and 1. Based on the signal level appearing on the ID pin 2 when HH, HL, LH, LL are written into the ID pins 0 and 1, the CPU 610 identifies the attached machine as one of the machines 208 through 214 with identification numbers 8 through 14 (Figs.17 through 23). The identification table is as follows:

```
                Output Signal Level of ID pin 2


ID pin 0/ pin 1:  H/H    H/L    L/H    L/L         Result


                   H      H      H      H    --->  No machine
                   H      H      H      L    --->  ID Number  8
                   H      H      L      H    --->  ID Number  9
                   H      H      L      L    --->  ID Number 10
                   H      L      H      H    --->  ID Number 11
                   H      L      H      L    --->  ID Number 12
                   H      L      L      H    --->  ID Number 13
                   H      L      L      L    --->  ID Number 14
```

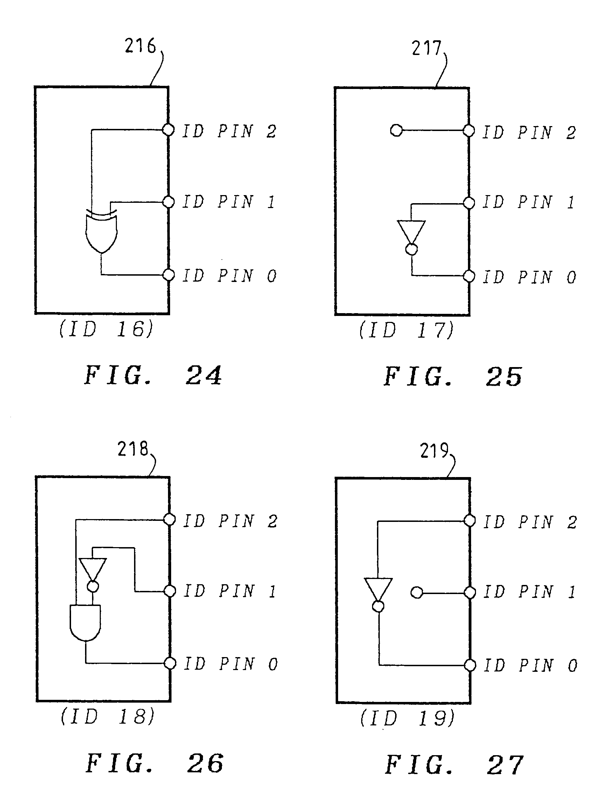

The level 2B test is operated when the ID signal levels on only the ID pins 1 and 2 are read to be H levels at the second cycle. At the level 2B test, HH, HL, LH, and LL levels signals are sequentially written into the ID pins 1 and 2. Based on the signal level appearing on the ID pin 0 when HH, HL, LH, LL are written into the ID pins 1 and 2, the CPU 610 identifies the attached machine as one of the machines 215 through 221 and 201 with identification numbers 15 through 21 and 1 (Figs.24 through 29 and 9). The identification table for the level 2B test is as follows:

```
                Output Signal Level of ID pin 0


ID pin 2/ pin 1:  H/H    H/L    L/H    L/L         Result


                   L      H      H      H    --->  ID Number 15
                   L      H      H      L    --->  ID Number 16
                   L      H      L      H    --->  ID Number 17
                   L      H      L      L    --->  ID Number 18
                   L      L      H      H    --->  ID Number 19
                   L      L      H      L    --->  ID Number 20
                   L      L      L      H    --->  ID Number 21
                   L      L      L      L    --->  ID Number  1
```

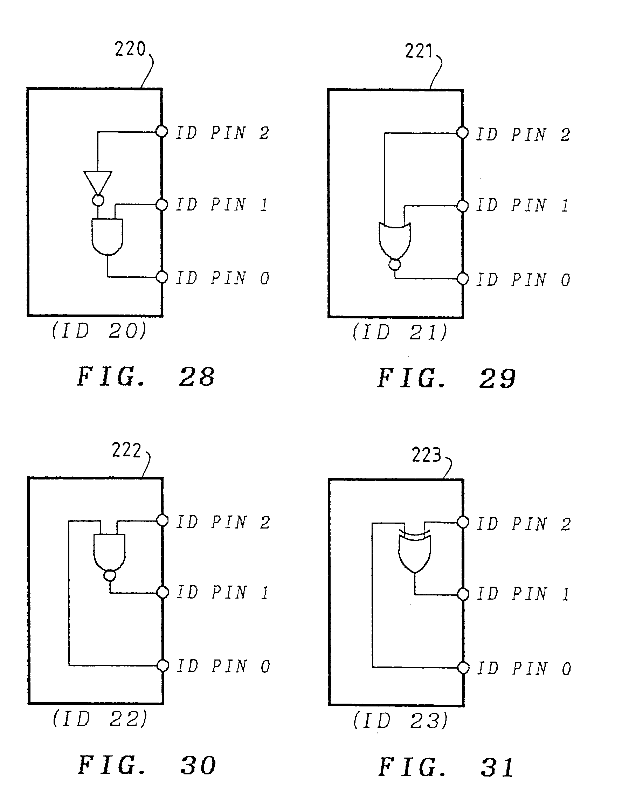

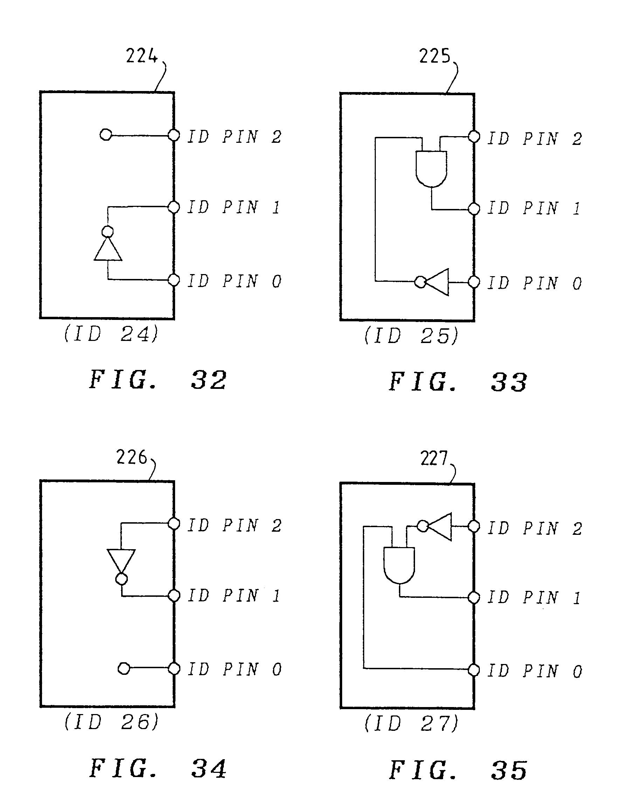

The level 2C test is operated when the ID signal levels on the ID pins 0 and 2 are read to be H levels at the second cycle. At the level 2C test, HH, HL, LH, and LL levels signals are sequentially written into the ID pins 2 and 0. Based on the signal level appearing on the ID pin 1 when HH, HL, LH, LL are written into the ID pins 0 and 2, the CPU 610 identifies the attached machine as one of the machines 222 through 228 and 202 with identification numbers 22 through 28 and 2 (Figs.30 through 36 and 11). The identification table for the level 2C test is as follows:

Output Signal Level of ID pin 1

| ID pin 2/ pin 0: | H/H | H/L | L/H | L/L | | Result |
|---|---|---|---|---|---|---|
| | L | H | H | H | ---> | ID Number 22 |
| | L | H | H | L | ---> | ID Number 23 |
| | L | H | L | H | ---> | ID Number 24 |
| | L | H | L | L | ---> | ID Number 25 |
| | L | L | H | H | ---> | ID Number 26 |
| | L | L | H | L | ---> | ID Number 27 |
| | L | L | L | H | ---> | ID Number 28 |
| | L | L | L | L | ---> | ID Number 2 |

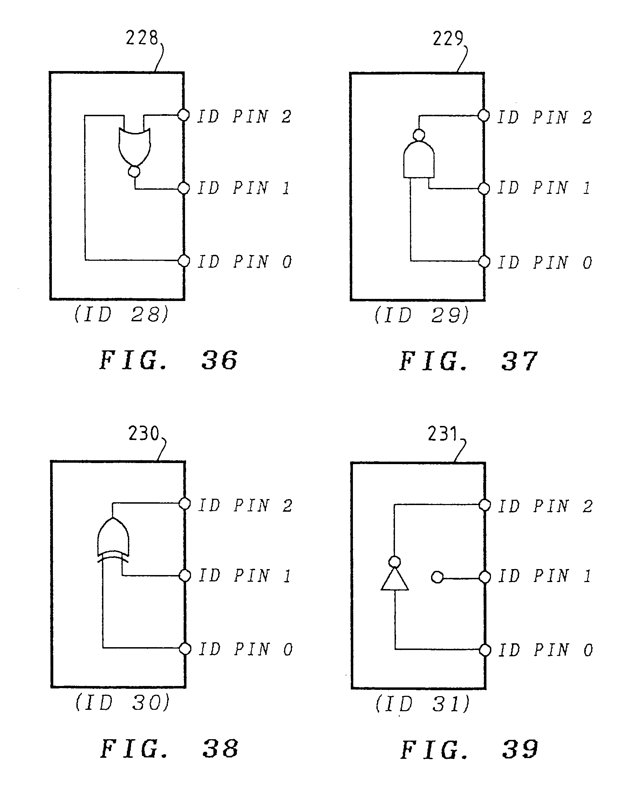

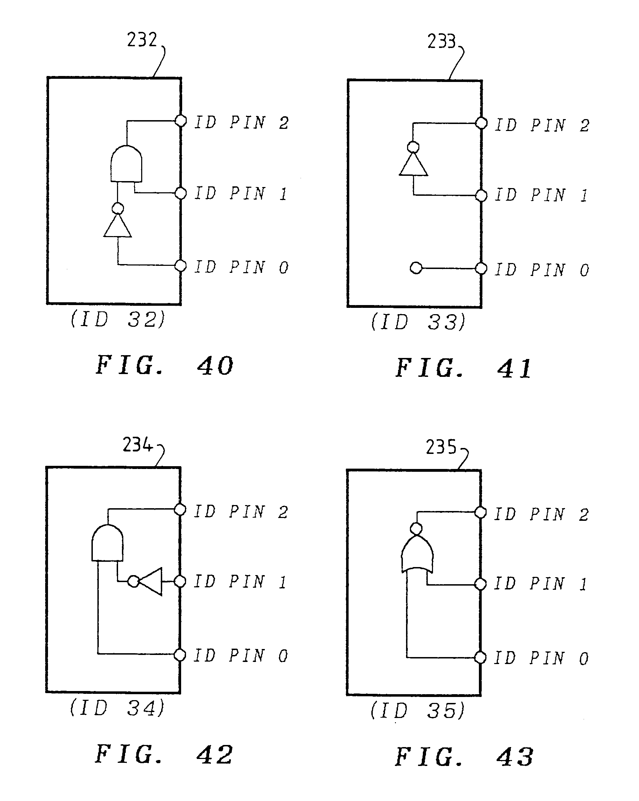

The level 2D test is operated when the ID signal levels on the ID pins 1 and 0 are read to be H levels at the second cycle. At the level 2D test, HH, HL, LH, and LL levels signals are sequentially written into the ID pins 1 and 0. Based on the signal level appearing on the ID pin 2 when HH, HL, LH, LL are written into the ID pins 1 and 0, the CPU 610 identifies the attached machine as one of the machines 229 through 235 and 204 with identification numbers 29 through 35 and 4 (Figs.37 through 43 and 13). The identification table for the level 2D test is as follows:

Output Signal Level of ID pin 2

| ID pin 1/ pin 0: | H/H | H/L | L/H | L/L | | Result |
|---|---|---|---|---|---|---|
| | L | H | H | H | ---> | ID Number 29 |
| | L | H | H | L | ---> | ID Number 30 |
| | L | H | L | H | ---> | ID Number 31 |
| | L | H | L | L | ---> | ID Number 32 |
| | L | L | H | H | ---> | ID Number 33 |
| | L | L | H | L | ---> | ID Number 34 |
| | L | L | L | H | ---> | ID Number 35 |
| | L | L | L | L | ---> | ID Number 4 |

It is possible with variations on machine identifier designs ID3, ID5, and ID6 to increase the total number of machines to 44.

Although the above embodiments have two or three ID pins, but more than three ID pins are possible to use.

It will be apparent to those skilled in the art that changes and modifications can be made without departing the spirit and scope of the invention as claimed.

**Claims**

1.  An information processing system including an information processing apparatus and an attachment apparatus to be connected to said information processing apparatus via identification signal terminals, wherein at least one of said terminals is connected to at least one of the remaining terminals directly or through a logic gate or gates, and said information processing apparatus is adapted to identify said attachment apparatus based on the level change on said terminals before and after said information processing apparatus writes a certain data signal on said terminal or terminals.

2.  An information processing system as claimed in claim 1 in which said attachment apparatus has identification signal terminals and said information processing apparatus has identification signal connectors for connection to said identification signal terminals and wherein at least one of said terminals is connected to at least one of the remaining terminals directly or through a logic gate or gates, and said information processing apparatus reads the signal levels on said identification signal terminals at a first cycle, writes at a second cycle a predetermined level signal on the identification signal terminal or terminals which are detected to be a predetermined signal level at said first cycle, reads at a third cycle the signal levels on said identification signal terminals, and identifies the attachment apparatus based on the combination of the signal levels obtained at said first cycle and said third cycle.

3.  An information processing apparatus having identification signal connectors to be attached to the identification signal terminals of an attachment apparatus to be attached to said information processing apparatus and identifying said attachment apparatus based on the combination of the signal levels on said terminals, wherein said information processing apparatus has level change means for changing the signal levels on the said identification signal terminals, and identifying means for determining the identity of said attachment apparatus based on the combination of the signal levels on said terminals before and after the signal level change caused by said level change means.

4.  An information processing apparatus as claimed in Claim 3, wherein said level change means and said identifying means comprise a programmed digital processor.

5.  Apparatus described in Claim 3, wherein said level change means comprises a timing generator and a flip flop, and said identifying means comprises a decoder circuit.

6.  An attachment apparatus for attachment to an information processing apparatus, said apparatus having identification signal terminals, wherein at least one of said terminals is connected to at least one of the remaining terminals directly or through a logic gate or gates, and said apparatus is so constructed as to be identified based on the signal level change appearing on said terminals before and after a certain level signal or signals are written on said terminal or terminals by said information processing apparatus.

FIG. 1

FIG. 2

FIG. 3

FIG. 4

FIG. 5

106

ID PIN 1

ID PIN 0

(ID 6)

*FIG. 6*

107

ID PIN 1

ID PIN 0

(ID 7)

*FIG. 7*

201

ID PIN 2

ID PIN 1

ID PIN 0

(ID 1)

*FIG. 10*

202

ID PIN 2

ID PIN 1

ID PIN 0

(ID 2)

*FIG. 11*

FIG. 8

FIG. 9

203

ID PIN 2

ID PIN 1

ID PIN 0

(ID 3)

**FIG. 12**

204

ID PIN 2

ID PIN 1

ID PIN 0

(ID 4)

**FIG. 13**

205

ID PIN 2

ID PIN 1

ID PIN 0

(ID 5)

**FIG. 14**

206

ID PIN 2

ID PIN 1

ID PIN 0

(ID 6)

**FIG. 15**

207

ID PIN 2

ID PIN 1

ID PIN 0

(ID 7)

*FIG. 16*

208

ID PIN 2

ID PIN 1

ID PIN 0

(ID 8)

*FIG. 17*

209

ID PIN 2

ID PIN 1

ID PIN 0

(ID 9)

*FIG. 18*

210

ID PIN 2

ID PIN 1

ID PIN 0

(ID 10)

*FIG. 19*

211

ID PIN 2

ID PIN 1

ID PIN 0

(ID 11)

## FIG. 20

212

ID PIN 2

ID PIN 1

ID PIN 0

(ID 12)

## FIG. 21

213

ID PIN 2

ID PIN 1

ID PIN 0

(ID 13)

## FIG. 22

214

ID PIN 2

ID PIN 1

ID PIN 0

(ID 14)

## FIG. 23

216

ID PIN 2

ID PIN 1

ID PIN 0

(ID 16)

*FIG. 24*

217

ID PIN 2

ID PIN 1

ID PIN 0

(ID 17)

*FIG. 25*

218

ID PIN 2

ID PIN 1

ID PIN 0

(ID 18)

*FIG. 26*

219

ID PIN 2

ID PIN 1

ID PIN 0

(ID 19)

*FIG. 27*

220

ID PIN 2

ID PIN 1

ID PIN 0

(ID 20)

F I G. 28

221

ID PIN 2

ID PIN 1

ID PIN 0

(ID 21)

F I G. 29

222

ID PIN 2

ID PIN 1

ID PIN 0

(ID 22)

F I G. 30

223

ID PIN 2

ID PIN 1

ID PIN 0

(ID 23)

F I G. 31

224

ID PIN 2

ID PIN 1

ID PIN 0

(ID 24)

FIG. 32

225

ID PIN 2

ID PIN 1

ID PIN 0

(ID 25)

FIG. 33

226

ID PIN 2

ID PIN 1

ID PIN 0

(ID 26)

FIG. 34

227

ID PIN 2

ID PIN 1

ID PIN 0

(ID 27)

FIG. 35

228

ID PIN 2

ID PIN 1

ID PIN 0

(ID 28)

## F I G. 36

229

ID PIN 2

ID PIN 1

ID PIN 0

(ID 29)

## F I G. 37

230

ID PIN 2

ID PIN 1

ID PIN 0

(ID 30)

## F I G. 38

231

ID PIN 2

ID PIN 1

ID PIN 0

(ID 31)

## F I G. 39

(ID 32)

FIG. 40

(ID 33)

FIG. 41

(ID 34)

FIG. 42

(ID 35)

FIG. 43